# EUROPEAN PATENT APPLICATION

(11) **EP 4 600 685 A1**
(43) Date of publication of application: **13.08.2025**
(21) Application number: 24156006.9
(22) Date of filing: 06.02.2024
(51) Int. Cl.: G01S 5/00, G01S 5/02, G01S 13/87, G01S 13/76, G01S 5/06

(54) **METHOD OF AND SYSTEM FOR LOCALIZING AN OBJECT USING AN ULTRAWIDE-BAND RADIO-BASED POSITIONING TECHNIQUE**

(71) Applicant: Siemens Aktiengesellschaft, 80333 München (DE)
(72) Inventor: Bröring, Arne, 81735 München (DE); Duong, Phuong Bich, 91052 Erlangen (DE)
(74) Representative: Siemens Patent Attorneys

(57) **Abstract**

A method of localizing an object (2) using an ultrawide-band radio-based positioning technique comprises: a) a tag (4) attached to the object transmitting (S1) an ultrawide-band radio signal; b) each of a plurality of anchor devices (5) arranged in an environment (3) in which the object is located receiving (S2) the ultrawide-band radio signal as a respective reception signal (9); c) using (S3) a trained signal classifier unit (7) comprising a dimensionality reduction engine (71) and a clustering engine (72) to determine whether the respective reception signal is a line-of-sight signal (91); d) using (S4) the ultrawide-band radio-based positioning technique to determine a position of the object in the environment based on the plurality of reception signals of the plurality of anchor devices and dependent on a result of the determination of step c).

## Description

The present invention relates to the field of the localization of objects and individuals inside buildings or factories using ultrawide-band radio, and, more particularly, to a method and a system for localizing an object using an ultrawide-band radio-based positioning technique.

Ultrawide-band (UWB) radio-based positioning techniques, such as Time Difference of Arrival (TDoA) or Two-Way Ranging (TWR) are used to realize accurate indoor localization of objects and individuals inside buildings or factories. A tag is attached to an object (the object may be a technical device, a tool, or an individual person) to be localized. The position of the tag is determined based on the signal propagation time (or based on differences between signal propagation times) of a ultrawide-band radio signal transmitted by the tag and received at each of a plurality of anchor devices installed at fixed positions in the building or factory. Both TDoA and TWR, having determined the signal propagation time (or the differences between signal propagation times), calculate the position of the tag using trilateration or multilateration techniques on the assumption that the signal travel time t corresponds to the distance d between the tag and the anchor device by the relations d = t *c, with c being the propagation speed of the ultrawide-band radio signals in air. An attainable precision is in a range of approximately 10 to 30 centimeters.

However, a challenge in applying these technologies is the presence of obstacles, such as walls, humans, or machines in the "line of sight" (LOS) between the radio transmitter and receiver. Such obstacles can hinder the accuracy of an ultrawide-band radio-based indoor localization system. A direct, LOS, signal transmission can contribute as a high-quality input to a TDoA or TWR calculation. On the other hand, a non-light of sight (NLOS) signal transmission can worsen the outcome of the TDoA or TWR calculation. In NLOS conditions, the radio signal may bounce off walls or other obstacles before reaching the receiver, resulting in a longer travel time and potentially leading to localization errors. In addition, there can be multipath conditions, where the radio signal may take multiple paths to reach the receiver, causing interference and leading to inaccurate positioning estimates.

A Kalman Filter can be used to estimate the position of an object based on noisy signals. Kalman Filters can account for measurement errors and noise, thereby mitigating the effects of NLOS signals. For example, one could incorporate information about the expected range and signal strength of the LOS signal, as well as the expected range and signal strength of the NLOS signal. By modeling the expected range and signal strength of both the LOS and NLOS signals, the Kalman Filter can be configured to weight the measurements according to their likelihood of being a LOS or NLOS signal, and to adjust the estimated position accordingly. In general, the effectiveness of a Kalman Filter depends on the accuracy of the measurements and the ability of the Kalman Filter to model and account for the effects of NLOS signals. While Kalman Filters can be effective in some situations, they may not always be sufficient, particularly in environments with complex geometry or reflective surfaces.

Reference is also made to literatures [1], [2] and [3] listed at the end of the present description.

In view of these obstacles, it is one object of the present invention to provide an improved ultrawide-band radio-based localization method and system.

Accordingly, under a first aspect, there is provided a method of localizing an object using an ultrawide-band radio-based positioning technique, the method comprising: a) transmitting, by a tag attached to the object, an ultrawide-band radio signal; b) receiving, by each of a plurality of anchor devices arranged in an environment in which the object is located, the ultrawide-band radio-signal as a respective reception signal; and d) using the ultrawide-band radio-based positioning technique to determine a position of the object in the environment based on the plurality of reception signals of the plurality of anchor devices. The method further comprises: c) using a trained signal classifier unit that comprises a trained dimensionality reduction engine and a trained clustering engine to determine whether the respective reception signal is a line-of-sight signal; and step d) is performed dependent on a result of the determination made in step c).

Accordingly, received signals can be weighed and/or filtered out based on whether they are determined, by the trained signal classifier unit, to be line-of-sight signals or not. The inventors have realized that a signal classifier unit trained using machine learning can advantageously exceed the performance of a Kalman filter in dealing with and/or singling out non-line-of-sight and multipath signals.

More specifically, the trained signal classifier unit has a structure comprising a trained dimensionality reduction engine and a trained clustering engine. Such a structure is suitable for unsupervised training using unlabeled training data, thereby obviating the cost and effort for collecting large amounts of labeled training data that would be required if a neural network that requires supervised machine learning would be used.

That is, the proposed method advantageously improves the accuracy of the ultrawide-band radio-based localization of objects in the presence of non-line-of-sight and/or multi-path propagation using machine learning, but without requiring the provisioning of labelled training data.

Herein, in particular, ultrawide-band may refer to radio signals in the Gigahertz range, more particularly in a range between 2.4 and 7 Gigahertz, most particularly in a range between 4 and 6 Gigahertz.

An anchor device may be an ultrawide-band radio receiving device that has a known, fixed position within the environment in which the object is located. The anchor devices may be fixedly installed on a premise, in a building, in a factory hall, and the like. A tag may be a ultrawide-band radio transmitting device. The tag may be attached to a moving object. The tag may further also be a radio receiving device and the anchor device may further also be a radio transmitting device. The anchor devices may be distributed over the environment so as to cover substantially the complete environment. A distance between any two neighboring anchor devices may be 100 m or less, preferably 50 m or less, more preferably 20 m or less, and most preferably 10 m or less.

The tag may transmit the ultrawide-band radio signal periodically in bursts.

The reception signal may be a signal that is recorded by radio reception circuitry of the anchor device when it receives the transmitted ultrawide-band radio signal from the tag. For the further description, the reception signal may be represented as a signal in transit, such as on a wire, or may be represented as a data representation of the signal, i.e. as a digital sampling, of the reception signal. The terms "signal" and "data representation of a signal" may be used interchangeably when referring to the reception signal.

Step d) may be performed based on the signal propagation times or differences of signal propagation times of the ultrawide-band radio signal between the tag and the respective anchor device that received the respective reception signal. Step d) may be performed based on the known positions of the anchor devices.

More particularly, step d) may comprise a sub-step of determining the signal propagation times or differences of signal propagation times; and may comprise a sub-step of performing multilateration. Linear regression and other statistical tools may be used in the multilateration sub-step.

More particularly, step d) may be performed using only those reception signals and anchor devices that were classified (that have received a reception signal that was classified) in step c) as a line-of-signal signal. Alternatively, reception signals and the corresponding anchor-device positions may be weighted according to whether the respective reception signal has been classified as a line-of-sight signal or not.

In particular, the dimensionality reduction engine may be configured to accept a data representation of a reception signal as input data and provide a dimensionality-reduced data representation of the reception signal as output data.

The dimensionality reduction engine may comprise a neural network. The neural network of the dimensionality reduction engine may be configured as an encoder. In other words, the neural network of the dimensionality reduction engine may comprise a plurality of neuron layers with decreasing numbers of neurons per layer in the input-output direction.

More particularly, in some examples, the neural network of the dimensional reduction engine may comprise an input layer, a number of one or more convolutional layers, and an output layer.

The clustering engine may likewise comprise a neural network. Alternatively, the clustering engine may comprise a mathematical model.

In particular, the clustering engine may be configured to accept a dimensionality-reduced data representation of the reception signal as input data and to provide a classification information indicating one of a plurality of pre-defined signal types as output data (as determination result). More particularly, herein, one of the plurality of pre-defined signal types is the signal type "line-of-sight signal". Further ones of the pre-defined signal types may include "non-line-of-sight signal" and/or "multipath signal".

The inventors have confirmed that through this combination, a mathematical model used as the clustering engine and working on dimensionality-reduced input has superior classifying performance as compared to a case in which the mathematical model is used with raw input data (raw reception signal samplings). Independent of the grammatical term usage, individuals with male, female or other gender identities are included within the term.

According to an embodiment, the ultrawide-band radio-based positioning technique is one of Time Difference of Arrival, TDoA, and Two-Way Ranging, TWR.

In TDoA, clocks of the anchor devices are synchronized with each other and the position of the mobile device is estimated based on a time difference between times at which the ultrawide-band radio signal is received (the reception signal occurs) at the different anchor devices.

In TWR, there is advantageously no need for clocks to be synchronized. Two wireless devices, such as the tag and the respective anchor device, transmit and receive signals and record the local time of reception and the local time of transmission as timestamps in the signal. As such, for example, each wireless device can determine the total roundtrip time, as indicated by the difference between local reception time of the return signal and local transmission time of the original signal, can subtract the signal processing delay introduced by the counterparty device as indicated by the difference between local time of transmission and local time of reception as recorded by the counterparty wireless device from the total roundtrip time, and can thus arrive at twice the signal propagation time between the two wireless devices.

Both in TdoA and TWR, the resulting signal propagation times (or signal propagation time differences) between the tag and each of the plurality of anchor devices and the known positions of the anchor devices may then be used to perform multilateration so as to determine an estimated position of the tag.

According to a further embodiment, step c) comprises determining whether the respective reception signal is a line-of-sight signal, a non-line-of-sight signal or a multipath signal.

A line-of-sight signal may be a reception signal received when the ultrawide-band radio signal is transmitted directly from the tag to the anchor device, more particularly without any obstacles being located between the tag and the anchor device. A non-line-of-sight signal may be a reception signal that is received when the ultrawide-band radio signal is attenuated or blurred by materials placed between tag and the anchor device. A multipath signal may be a signal that comprises at least one indirect signal path in which the ultrawide-band signal is reflected at a metal surface or the like so that its signal propagation time is longer than if it would have travelled on a direct path between the tag and the anchor device.

Classifying the reception signal into three different signal types advantageously allows to even better account for the specific conditions in the environment. For example, a non-line-of-sight signal may still be useful if the attenuation is not too high, whereas a multipath signal may be misleading, especially if the direct path is attenuated and the contributions of the indirect paths are higher than the contribution of the direct path.

According to a further embodiment, step c) comprises a hard determination that assigns the reception signal to exactly one signal type, and step d) comprises discarding the reception signal if it is not a line-of-sight signal.

That is, any signal that is not a line-of-sight signal is advantageously filtered out, thereby improving accuracy of the localization method.

According to a further embodiment, step c) comprises a soft determination that determines, for each reception signal, respective probabilities of the reception signal being a respective one of a plurality of signal types, and step d) comprises determining the position of the object based on the plurality of reception signals weighted according to their respective probability of being a line-of-sight signal.

Using soft determination may advantageously prevent excessive filtering out and can ensure that enough reception signals remain to perform the multilateration with high confidence.

According to a further embodiment, the reception signal is a time-dependent channel impulse response, CIR, of a wireless channel to receipt of the ultra-wide band radio signal at the respective anchor device.

The CIR may comprise both amplitude and phase information. As such, the CIR advantageously may contain more information on which a more accurate classification can be based.

According to a further embodiment, step d) comprises inputting a data representation of the reception signal into the trained dimensionality reduction engine, inputting an output of the trained dimensionality reduction engine into the trained clustering engine and determining whether the reception signal is a line-of-sight signal based on an output of the trained clustering engine.

Thus, advantageously, the dimensionality reduction engine may reduce the dimensionality of the input data (data representations of the reception signals that are input into the dimensionality reduction engine) and may allow the clustering engine to operate on input data having reduced dimensionality.

A data representation of the reception signal may comprise a sampling of the reception signal, that is, for example, an array of floating point numbers representing amplitude and phase of the reception signal at consecutive points in time. If the reception signal is the CIR, the floating point numbers may be indicative of respective combined magnitudes of the CIR, or two floating point numbers for each point in time may be representative of the real part and the imaginary part of the CIR, respectively. In addition to the sampling, the data representation of the reception signal my comprise further attributes such as, for example, a signal ID, a tag ID, an anchor device ID, a timestamp, a signal strength (RSSI), and the like.

The inventors have conceived that a trainable clustering engine can advantageously perform the clustering more accurately with higher classifying performance when it operates on dimensionality-reduced data representations of the reception signal as compared to a case in which the clustering engine operates directly on the raw data representations of the reception signal.

According to a further embodiment, the method further comprises e) unsupervised training of the signal classifier unit using unlabeled data representations of a plurality of the reception signals as training input data.

Step e) may be performed prior to performing any of steps c) or d), so as to train an untrained signal classifier unit and obtain the trained signal classifier unit for use in steps c) and/or d)
In this case, the plurality of receptions signals may be collected upfront in a data collection phase in which tags may be either statically placed, or may be dynamically moved by a forklift or the like, throughout substantially the entire environment of interest, may transmit ultrawide-band radio signals that are received by the anchor devices, and the reception signals (data representations thereof) received by the anchor devices may be recorded in the database. After the data collection is completed, the training step e) may be performed using the reception signals that are stored in the database as unlabeled training input data.

However, step e) may also be performed continuously "on the fly", in parallel to steps c) and d) or in a loop with steps c) and d), re-using the reception signals, which are used in steps c) and d) for localization, also as further training data.

That is, the training step e) may either be initial training or may be further training, re-training, and the like.

It is noted that initial training is optional. The method may start out with an untrained signal classification device. In this case, initially, the classification performance is poor, but the method may still be of use if there are only few obstacles in the premise. Over time, the classification performance of the signal classification device may then gradually improve, as the signal classification device undergoes unsupervised training "on the fly".

Advantageously, step e) is a step of unsupervised learning. Thus, step e) uses only training input data (the reception signals as acquired in the environment in which the signal classifier unit is going to be used) are required, but no manually labeled training output data is required, thereby reducing the cost and time effort required for employing a trained classifier unit in a real-life scenario.

According to a further embodiment, step e) comprises a first sub-step of unsupervised training of the dimensionality reduction engine by: forming an autoencoder comprising the dimensionality reduction engine as an encoding engine and a decoding engine; and unsupervised training of the autoencoder so as to minimize its reconstruction error.

Herein, particularly, the reconstruction error is indicative of a deviation between a data representation of the respective reception signal input to an input layer of the dimensionality reduction engine and a corresponding data representation output by an output layer of the decoding engine.

In particular, in the training according to the first sub-step, the goal is to reproduce the training input data that is input to the encoding engine (dimensionality reduction engine) at the output of the decoding engine. Thus, no human-labeled training output data is required, and the training input data can be used also as the training output data for the training, and the training can be carried out in an unsupervised manner using techniques such as, for example, gradient-based back-propagation.

In particular, in the autoencoder, the output layer of the dimensionality reduction engine may be the same as the input layer of the decoding engine and may also be referred to as a coding layer.

It may be said that when training according to the first sub-step is complete, the dimensionality reduction engine has acquired the capability to extract hidden features from the data representations of reception signals, the hidden features being represented as feature values obtained from the neurons of the coding layer upon inputting a data representation of a reception signal into the input layer of the dimensionality reduction engine. The feature values of the coding layer can then be said to constitute a dimensionality-reduced representation of the reception signal.

According to a further embodiment, step e) comprises a second sub-step of unsupervised training the clustering engine by: inputting the data representations of the reception signals to the input layer of the dimensional reduction engine trained in the first sub-step and unsupervised training the clustering engine using data representations output at an output layer of the dimensionality reduction engine as training input data for the unsupervised training of the clustering engine.

That is, the dimensionality-reduced representations of the reception signals are used to train the clustering engine.

The inventors have conceived that the training of the clustering engine can advantageously result in a trained clustering engine having a higher, more accurate classifying performance when the unsupervised training it carried out using dimensionality-reduced data representations of the reception signal as training input data as compared to a case in which the clustering engine is trained with raw data representations of the reception signal as training input data.

It may be said that when training according to the second sub-step is complete (has been performed sufficiently often), the clustering engine reduction engine has acquired the capability to determine a signal type (such as line-of-sight, non-line-of-sight, multipath) in response to being provided with a dimensionality-reduced data representation of a reception signal as input.

According to a further embodiment, the clustering engine comprises one of a k-means model and a Gaussian mixture model.

K-means models and Gaussian mixture models are advantageously trainable in an unsupervised manner so as to recognize clusters in input data without requiring labeled training output data.

According to a further embodiment, step e) comprises a third sub-step of assigning each cluster identified by the clustering engine trained in the second sub-step to one of the signal types based on a statistic property of the reception signals of the respective cluster and/or a statistical property of the position determined in step d) using exclusively reception signals of the respective cluster.

A mathematical model such as k-means or Gaussian mixture can learn the ability to divide the dimensionality-reduced data representations of the reception signals into a plurality of clusters, however, the model on its own may not be able to gain insight into which of the clusters represents which signal type. However, such insight can be derived, advantageously without requiring human labelling of the clusters, based on statistical properties of the reception signals and/or of the positions derived from the reception signals of any given cluster.

For example, amplitudes of a reception signal having a clear peak and few noise will have a low standard deviation over time. As such, the cluster comprising the reception signals - of the reception signals comprised in the training input data - having the least mean standard deviation over time may be identified as the cluster corresponding to the line-of-sight signal type.

For example, the multilateration in step c) may yield not only an estimated position of the object, but may also yield an uncertainty measure that results from linear regression that needs to be performed when it is not possible to arrive at an exact situation in the multilateration step. Herein, the most accurate multilateration is possible when only line-of-sight signals take part in the multilateration. Accordingly, the method may comprise performing one or more multilaterations for one or more tags using, each time only receiving signals of a single respective cluster, and determining that the cluster that yields the lowest uncertainty measure for the estimated position is the cluster that represents the "line-of-sight" signal type.

These examples are non-limiting and the skilled person will derive, through analogous statistical considerations, further techniques how to unsupervisedly assign each cluster to a respective signal type without requiring human labelling.

According to a further aspect, the invention relates to a computer program product comprising instructions which, when the program is executed by one or more computing devices, cause the one or more computing devices to carry out the above-described method.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a further aspect, the invention relates to a system for localizing an object using an ultrawide-band radio-based positioning technique, the system comprising: b) a plurality of anchor devices arranged in an environment in which the object is located and configured to receive an ultrawide-band radio signal that is transmitted by a tag attached to the object as a respective reception signal; c) a computing device configured to use the ultrawide-band radio-based positioning technique to determine a position of the object in the environment based on the plurality of reception signals of the plurality of anchor devices; d) a trained signal classifier unit that comprises a trained dimensionality reduction engine and a trained clustering engine and is configured to determine whether the respective reception signal is a line-of-sight signal; wherein the computing device is configured to determine the position of the object dependent on a result of the determination made by the trained signal classifier unit.

The embodiments, features and advantages described with reference to the method of the present invention apply mutatis mutandis to the system of the present invention.

It is noted that the system of the present invention may or may not comprise the respective tag attached to or attachable to a respective object.

The computing device may be a single computing device comprising a single apparatus or may be a distributed computing device comprising multiple apparatuses that are in communication with each other. In some embodiments, the distributed computing device may also comprise one or more of the anchor devices. In some embodiments, the distributed computing device may also comprise one or more of the tags.

The signal classifier unit may be embodied in hardware or in software. The signal classifier unit may be embodied as a unit of the computing device. The signal classifier unit may also be embodied as a separate device that is in communication with the computing device.

According to an embodiment, the above-mentioned system further comprises the tag attached to the object and configured to transmit the ultrawide-band radio signal.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic diagram of a system for localizing an object using an ultrawide-band radio-based positioning technique according to a first exemplary embodiment;
Fig. 2 visualizes steps of a method for localizing an object using an ultrawide-band radio-based positioning technique according to the first exemplary embodiment;
Fig. 3a visualizes a channel impulse response of a line-of-sight signal type;
Fig. 3b visualizes a channel impulse response of a non-line-of-sight signal type;
Fig. 3c visualizes a channel impulse response of a multipath signal type;
Fig. 4 shows a schematic diagram of a system for localizing an object using an ultrawide-band radio-based positioning technique according to a second exemplary embodiment;
Fig. 5 visualizes a first sub-step of a step of unsupervised training a signal classifier unit of the system of the second exemplary embodiment; and
Fig. 6 visualizes a second sub-step of the unsupervised training step.

In the Figures, like reference numerals designate like or functionally equivalent elements, unless otherwise indicated.

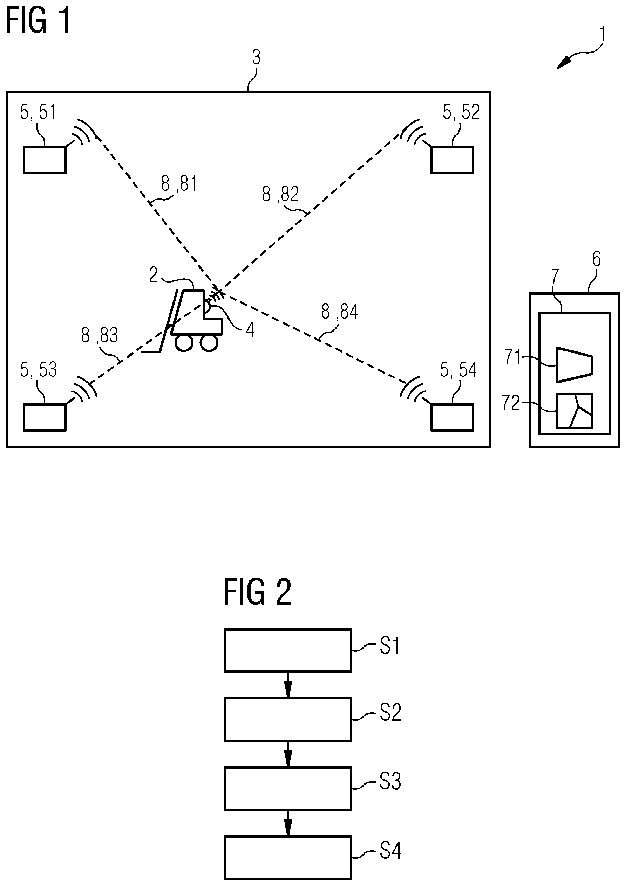

Fig. 1 shows a schematic diagram of a system for localizing an object using an ultrawide-band radio-based positioning technique according to a first exemplary embodiment. An object 2, such as a forklift, moves in a premise 3, such as an assembly hall, while performing work operations within the premise 3. The premise 3 is one example of an environment 3 in which the object 2 is located. It is desired to know the position of the object 2 within the premise 3. To this end, a tag 4 is attached to the object 2. The tag 4 is a radio-transmitting device that can transmit an ultrawide-band radio signal.

The system 1 for localizing the object 3 having the ultrawide-bad radio signal transmitting tag 4 attached thereto comprises a plurality of anchor devices 5, 51-54 that are distributed at various locations within the premise 3. The localization system 1 further comprises a computing device 6 that is configured to carry out the steps of a method for localizing the object 2 that will be described hereinbelow. More particularly, the computing device 6 comprises a trained signal classifier unit 7. The trained signal classifier unit 7 comprises a trained dimensionality reduction engine 71 and a trained clustering engine 72.

Fig. 2 visualizes steps of a method for localizing an object using an ultrawide-band radio-based positioning technique according to the first exemplary embodiment. Reference will be made to Fig. 1 and Fig. 2.

In step S1, the tag 4 that is attached to the object 2 transmits an ultrawide-band radio signal. For example, tag 4 periodically transmits an ultrawide-band radio signal burst.

In step S2, each of the plurality of actor devices 5 receives the ultrawide-band radio signal that has been transmitted by the tag 4 and has propagated along a respective propagation path 8, 81-84 from the tag 4 to the respective anchor device 5, 51-54 as a respective reception signal (not shown in Fig. 1).

According to one preferred example, the reception signal is a time-dependent channel impulse response (CIR). The CIR is a time-varying response of a wireless channel to reception of the transmitted ultrawide-band signal and may be represented as a time-domain waveform which describes the channel response as a function of time.

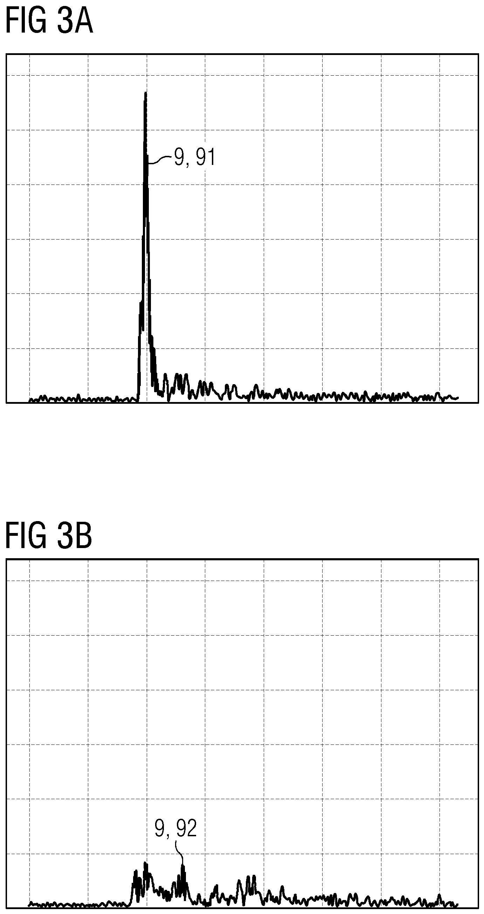

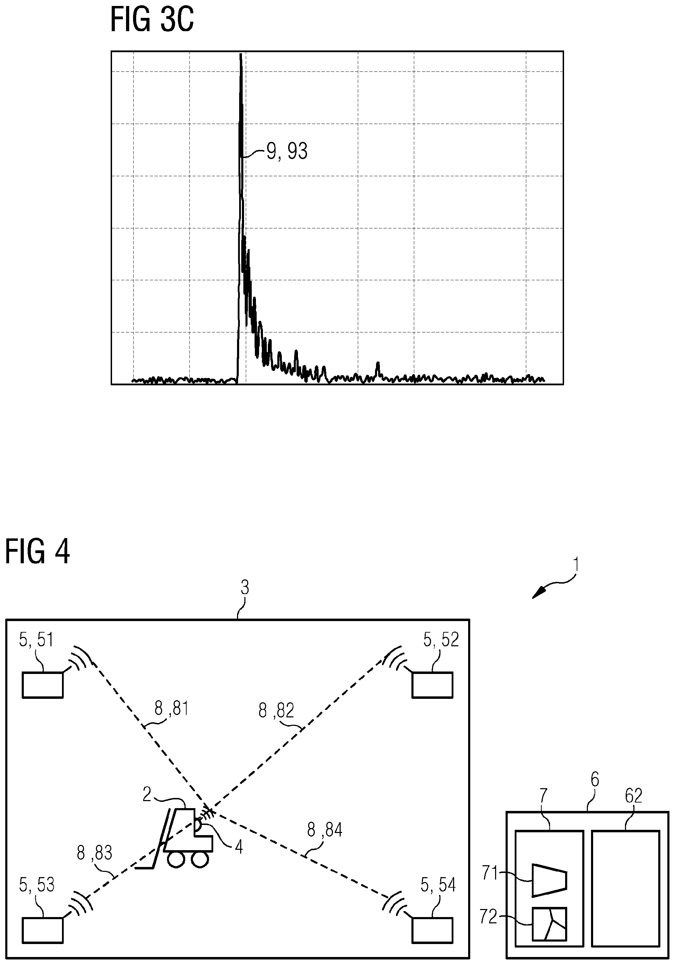

Figs. 4a to 4c show channel impulse responses 9 (reception signals) received in various scenarios according to one preferred example. In each of Figs. 4a to 4c, the x-axis represents time and the y-axis represents amplitude or a magnitude of a vector that comprises an amplitude component and a phase component. Fig. 3a shows the channel impulse response, CIR, 91 received at one of the anchor devices 5 in a line-of-sight, LOS, scenario, in which, as depicted in Fig. 1, the ultrawide-band radio signal has propagated along a linear and obstacle-free propagation path 8 directly from the tag 4 to the respective anchor device 5. The LOS CIR 91 in Fig. 3a shows one clear peak, the x-axis coordinate of which may be identified with the time of reception of the reception signal 91. Fig. 3b shows the CIR 92 received at one of the anchor devices 5 in a non-shown non-line-of-sight, NLOS, scenario, in which an impermeable obstacle is placed between the tag 4 and the receiving anchor device 5. In the non-line-of-sight scenario, the ultra-wideband signal has propagated along at least one indirect propagation path that comprises at least one reflection at a metallic surface or the like. As can be seen in Fig. 3b, because the NLOS CIR 92 comprises a plurality of reflections from different surfaces, it is difficult to identify any meaningful peak position in the noisy NLOS CIR 92.

Fig. 3c shows the CIR 93 received at one of the anchor devices 5 in a multipath scenario. The multipath CIR 93 of Fig. 3c comprises both a line-of-sight component and one or more non-line-of-sight components. That is, the multipath CIR 93 may be conceptually understood as being a superposition of a LOS CIR and one or more NLOS CIRs. The multipath CIR 93 may be useful in determining a time of receipt of the reception signal along the direct propagation path, however, an error or uncertainty may be higher than in the LOS CIR 91, due to the noise introduced by the NLOS signal components of the multipath CIR 93.

The respective reception signals 9 of the anchor devices 5 and/or respective data representations thereof are provided to the computing device 6.

Reference is again made to Fig. 1 and Fig. 2. In step S3, the computing device 6 uses the trained signal classifier unit 7, which comprises the trained dimensionality reduction engine 71 and the trained clustering engine 72, to determine whether or not the respective reception signal 9 is a line-of-sight signal 91.

More particularly, the computing device 6 inputs a data representation of the respective reception signal 9 into the dimensionality reduction engine 71 so as to obtain, as an output of the trained dimensionality reduction engine 71, a data representation of the reception signal 9 having a reduced dimensionality. Herein, in particular, a reduced dimensionality refers to the fact that the output of the dimensionality reduction engine 71 is a representation of the reception signal 9 that comprises less, but more relevant data points than the data representation of the reception signal that is input into the dimensionality reduction engine 71.

Then, the output of the dimensionality reduction engine 71 is input into the trained clustering engine 72. The trained clustering engine 72 assigns the dimensionality-reduced representation of the reception signal 9 to one of two or more clusters. Herein, a first cluster is a cluster comprising line-of-sight signal data representations. A second cluster may comprise data representations that are not line-of-sight signal data representations. Alternatively, the second cluster may comprise non-line-of-sight signal data representations, and a third cluster may comprise multipath signal data representations. As such, the clustering performed by the trained clustering engine 72 corresponds to a determination whether or not the reception signal 9 is a line-of sight signal, and/or may correspond to a determination whether the reception signal 9 is a line-of-sight signal, a non-line-of-sight signal or a multipath signal.

As one example, the trained dimensionality reduction engine 71 may be a trained neural network. As one example, the trained clustering engine 72 may be a trained mathematical model. Details of one possible way of training will be described later.

In the example described hereinabove, the determination of the signal type of the reception signal 9 is a hard determination that assigns the reception signal to exactly one signal type. However, it is also conceivable to use a soft determination that determines, for each reception signal 9, a respective probability of the reception signal 9 being a respective one of a plurality of signal types, such as LOS, NLOS, and multipath. Merely as one example, if the trained clustering engine 72 assigns each dimensionality-reduced signal data representation to a point in a 2D plane, and areas in the 2D plane correspond to signal type clusters corresponding to LOS, NLOS, and multipath, respectively, the probabilities of the reception signal being one of LOS, NLOS, and multipath can be determined based on a distance of the point in the 2D plane from a center of each of the areas, from borders between the areas, or the like.

In step S4, the computing device uses an ultrawide-band radio-based positioning technique to determine a position of the object 2 based on the plurality of reception signals 9 received by each of the anchor devices 5.

According to one example, the ultrawide-band radio-based position techniques is Time Difference of Arrival, TDoA. Herein, clocks of the plurality of anchor devices 5 are synchronized, so that a time difference between occurrence of respective first peaks in the respective reception signals 9 for the same transmitted ultrawide-band radio signal burst are indicative of a difference in signal propagation time between the tag 4 and the respective anchor device 5. Then, the position of the object 4 can be determined using multilateration. For example, the differences in signal propagation times are converted using the known ultrawide-band signal transmission speed in air to obtain differences in signal propagation path lengths. Then, linear regression may be used to obtain the absolute signal propagation path lengths of each of the signal propagation path 8 such that circles (in 2D) or spheres (in 3D) drawn around each of the anchor devices 5 with the respective signal propagation path length as radius intersect in a single location or, if that is not possible, intersect with minimum mismatch. Then, linear regression may be used to determine a point in space that has the least mean square distance to each of the circles or spheres. This location can then be identified as the position of the object 4.

According to another example, the ultrawide-band radio-based positioning technique is Two-Way Ranging, TWR. Herein, there is no need for clocks of the anchor devices 5 to be synchronized. In TWR, each, of the tag 4 and the respective anchor device 5 transmit a challenge signal and the respective other device 4,5, upon receiving the challenge signal, transmits a response signal. The response signal contains a timestamp t2 that indicates when the challenge signal was received and a timestamp t3 that indicates when the response signal was transmitted. Furthermore, the device 4,5 that transmitted the challenge signal records a timestamp t1 that indicates when the challenge signal was transmitted and records a timestamp t4 that indicates when the response signal was received. By subtracting t1 from t4 and further subtracting the difference t3-t2, indicative of the processing delay in the device 4,5 that receives the challenge signal and transmits the response signal, from the result of t4-t1, the total signal roundtrip time can be determined. The total signal propagation time between the two devices 4, 5 is then 0,5 * ((t4-t1) - (t3-t2)). Herein, there is no need for the clocks in which the one device measures t3 and t2 to be synchronized with the clock in which the other device measures t4 and t1. Furthermore, the resulting signal propagation time can then be used to position the data representation of the reception signal 9 on a timescale in which 0 indicates the time of transmission of the challenge signal. There is therefore no need for the clocks of different anchor devices 5 to be synchronized with each other. Each anchor device 5 can then transmit a data representation of its such-positioned reception signal 9 to the computing device 6, and the time at which a peak occurs in the reception signal 9 indicates a signal propagation time between the respective anchor device 5 and the tag 4. Multilateration can then be performed in the same way as was described for TdoA.

Herein, the reader will appreciate that the result of the multilateration according to TdoA, TWR or a similar positioning technique will be accurate if all reception signals 9 used for performing said multilateration are line-of-signals 91, but accuracy will decrease when non-line-of-sight signals 92 or multipath signals 92 also take part in the multilateration process. For a non-line-of sight signal 92 (or a non-line-of-sight component of a multipath signal 93), the signal propagation path length determined from said signal 92 will correspond to signal propagation path comprising at least one reflection at a metallic surface that is longer than the corresponding direct signal propagation path 8 leading directly from the tag 4 to the respective anchor device 5. As such, an error will be introduced when using such a non-direct signal propagation path length in the multilateration process as described hereinabove.

Therefore, according to the present exemplary embodiment, in step S4, the position of the object 2 is determined based not only on the position of peaks in the reception signals 9 received by each of the anchor devices 5, but also based on the signal type determination of the reception signal 9 that was performed in step S3.

In the example in which the signal type determine is a hard determination, the computing device 6 may discard any reception signal 9 that is not determined to be a line-of-sight signal, such that only reception signals 91 determined to be line-of sight signals take part in the multilateration process.

In the example in which the signal type determination is a soft determination, the contributions of the respective reception signals 9 to the multilateration performed in step S4 may be weighted based on the probability of the reception signal 9 being a line-of-sight signal 91. For example, in the least-squares regression that determines the position of the object 4 as described hereinabove, distances to circles or spheres drawn with radiuses corresponding to the signal propagation path 8 lengths may be weighted with (multiplied by) the probabilities of the corresponding reception signals 9 being line-of-sight signals.

Thus, advantageously, non-line-of-sight signals 92 and multipath signal 93 do not contribute to, or contribute to a lesser extent, to determining of the position of the object 4. Accordingly, and advantageously, the position of the object 4 may be determined with higher accuracy.

Herein, advantageously, a trained signal classifier unit 7 is used. In particular, the trained signal classifier unit 7 comprises a trained clustering engine 72 that works on the output of a trained dimensionality reduction engine 71. Such a trained signal classifier unit 7 may advantageously have a high classification accuracy. Furthermore, a trained signal classifying device 8 with this particular structure may advantageously be trained with little cost and effort in an entirely unsupervised fashion that does not require human labelling of training data, as will be described hereinbelow in more detail.

Fig. 4 shows a schematic diagram of a system for localizing an object using an ultrawide-band radio-based positioning technique according to a second exemplary embodiment. The second exemplary embodiment is based on the first exemplary embodiment and the description focuses on differences.

While the first exemplary embodiment described use of a trained signal classifier unit 7 that has been trained in an unsupervised manner, in the localization system 1 of the second embodiment, the signal classifier unit 7 (the dimensionality reduction engine 71 and the clustering engine 72) are initially untrained. The description of the second exemplary embodiment therefore focuses on describing exemplary details of the signal classifier unit 7 and its sub-units (engines), and how the signal classifier unit 7 can be trained in an unsupervised manner.

The localization system 1 of the second exemplary embodiment additionally comprises a database unit 62 that is used for training data collection in a data collection phase that precedes a runtime phase. The runtime phase corresponds to the method steps S1-S4 that were described for the first exemplary embodiment.

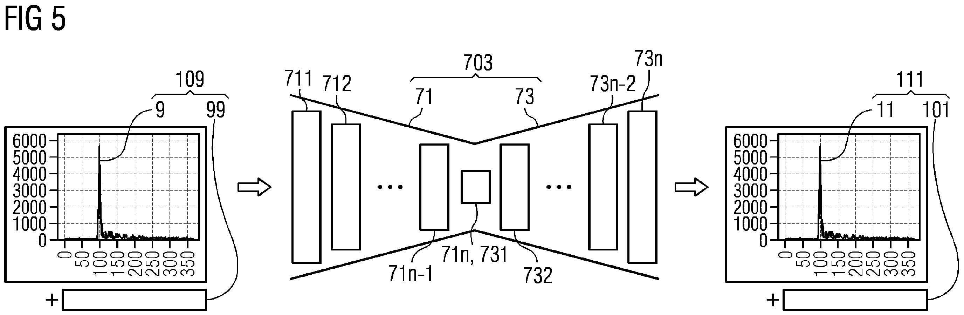

Specifically, in the data collection phase, for example, signal measurements are taken across a large part of, a substantial part of or all of the entire premise 3 using a plurality of tags 4 that may be placed a fixed locations throughout the premise 3, or using at least one or more tags 4 that may be moved through the premise 3 using a mobile robot or forklift or the like along a controlled path. From each tag at each position, the anchor devices 5 acquire a respective reception signal 9 (Fig. 3a-3c) and forward a data representation 109 (Fig. 5) of the reception signal 9 (Fig. 3a-3c) to the computing device 6, which stores the data representations 109 (Fig. 5) of the reception signals 9 (Fig. 3a-3c) of the anchor devices 5 in the database unit 62.

It is noted that in the data collection phase, the tags 4 used for data collection may be preinstalled tags disposed in the premise 3, or the one or more tags 4 may be moved through the premise 3 using a robot following an automated program that makes the robot cover a substantial area of the premise 3. That is, the data collection phase may advantageously be carried out in a fully automated manner without human intervention.

Then, in a training phase, which comes after the data collection phase and precedes the runtime phase, a step of unsupervised training of the signal classifier unit 7 using the unlabeled data representations 109 (Fig. 5) of the reception signals 9 (Fig. 3a-3e) that are stored in the database unit 62 as training input data is carried out.

Fig. 5 visualizes a first sub-step of the unsupervised training step in which the signal classifier unit 7 of the localization system 1 according to the second exemplary embodiment is trained in an unsupervised manner. Reference is made to Fig. 4 and Fig. 5.

In Fig. 5, an exemplary data representation 109 of an exemplary reception signal (channel impulse response, CIR) 9 comprises a sampling of the CIR 9, such as, for example, an array of floating point numbers. Therein, each floating number may represent a magnitude of a vector having an amplitude component and a phase component of the CIR 9. Alternatively, each two floating point numbers may represent an amplitude component (real part) and a phase component (imaginary part of the CIR 9. Furthermore, the data representation 109 may comprise additional signal attributes 99 that comprise one or more floating point number indicative of a signal ID, a tag ID, an anchor device ID, a timestamp, a signal strength (RSSI), and the like.

In the first sub-step of the unsupervised training step, an autoencoder 703 is formed. The autoencoder 703 is a neural network that comprises the dimensionality reduction engine 71, which, in the present exemplary embodiment, is configured as an encoding engine comprising a plurality of neuron layers 711, 712, ..., 71n-1, 71n with decreasing numbers of neurons for each layer. The autoencoder 703 further comprises a decoding engine 73 comprising a plurality of neuron layers 731, 732, ..., 73n-1, 73n with increasing numbers of neurons for each layer. More particularly, the decoding engine 73 may comprise similar layers (layers with the same numbers of neurons and other properties) as the encoding engine 71, but in reverse order. More particularly, the last layer 71n of the encoding engine and the first layer 731 of the decoding engine is a shared layer (is the same, identical layer) and is also referred to as a coding layer 71n, 731.

In the first sub-step of the unsupervised training step, each data representation 109 of each reception signal 9 stored in the database unit 62 is fed into the autoencoder 703. The encoding engine 71 reduces the data representation 109 into a lower-dimensionality space, the so-called latent feature space, which is captured in the code layer 71n. Then, the decoding engine 73 converts the latent feature space back to the higher-dimensionality data space and reconstructs a reconstructed data representation 111 of a reconstructed reception signal 11 and its attributes 101. A so-called loss, or reconstruction error, characterizes a difference between the input data representation 109 of the reception signal 9 and the reconstructed data representation 111. The loss may, for example, be defined as a mean squared error between the input data representation 109 and the reconstructed data representation 111. Then, backpropagation is performed so as to reduce or minimize said loss (reconstruction error). That is, the gradient of the loss function is computed with respect to weights of the neurons of the layers 711-73n in the autoencoder 703 by iterating backward form the output layer 73n to the input layer 711. By iteratively minimizing the loss in this way, the autoencoder 703 is trained to compress the most relevant information about the respective reception signals 9 into the coding layer 71n. That is, after unsupervised training of the first-sub-step in the described manner is completed, the encoding engine (dimensionality reduction engine) 71 is trained to compress the data representations 109 of the reception signals 9 into data representations with reduced dimensionality that are output in the coding layer 71n.

It is noted that one particularly suitable exemplary and non-limiting structure of the autoencoder 703 may be as follows: The input layer 71n may comprise 150 neurons into which a data representation 109 of a Cir 9 can be ingested. In a feed forward manner through the neural network of the autoencoder 703, the data then passes the encoding engine 71 which consists of three convolutional layers 712 - 71n-1. The first convolutional layer 712 may be a convolutional layer with 16 filters and kernel size 5, which may be expressed as Conv1D(16,5) in the Python Keras API notation. The second convolutional layer (not shown) may be a Conv1D(8,3) layer. The third convolutional layer 71n-1 may be a Conv1D(1,3) layer. Correspondingly, in a mirroring fashion, the first convolutional layer 732 of the decoding engine 73 may be a Conv1D(1,3) layer, the second convolutional layer (not shown) of the decoding engine 73 may be a Conv1D(8,3) layer, and the third convolution layer 73n-1 of the decoding engine 73 may be a Conv1D(16,5) layer. Thus, the output layer 73n of the decoding engine 73 may comprise 150 neurons into which the reconstructed data representation 111 is output.

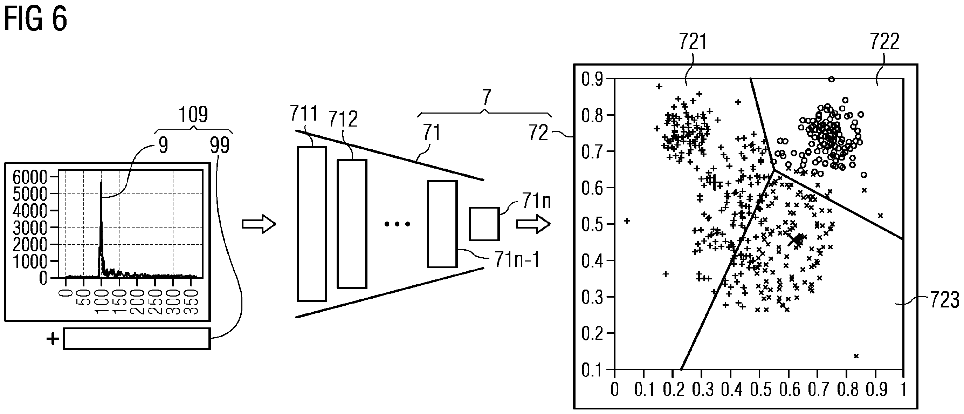

Fig. 6 visualizes a second sub-step of the unsupervised training step. Reference is made to Figs. 4 and 6.

The second sub-step of the unsupervised training step is a step of unsupervised training the clustering engine 72. The second sub-step comprises inputting the data representations 109 of the reception signals 9 stored in the database unit 62 into the input layer 711 of the dimensionality reduction engine 71 that was trained in the first sub-step. Then, unsupervised training of the clustering engine 72 is performed using the reduced-dimensionality data representations output by the dimensionality reduction engine 71 at its output layer 71n as training input data for unsupervised training of the clustering engine 72. Therein, the clustering engine 72 is trained to assign the dimensionality-reduced data representations of the reception signals 9 into different clusters 721-723 corresponding to the LOS signal type, the NLOS signal type, and the multipath signal type.

In the present exemplary embodiment, the clustering engine 72 operates according to the k-means algorithm from literature [1]. That is, the clustering engine 72 is a k-means mathematical model. Accordingly, unsupervised training of the clustering engine 72 may comprise an assignment step of assigning the feature sets (dimensionality-reduced data representations) of the receptions signals 9 output at the output layer 71n of the dimensionality reduction engine 71 to one of the clusters 721-723 whose mean it is closest to. Then, in an update step, all means (centroids) of all feature sets assigned to each cluster 721-723 are recalculated. Then, the assignment step is executed again using the newly recalculated means. This cycle of assignment step and update step is repeated until no changes of assignment occur between two consecutive cycles. In this way, the clustering engine 72 is trained to assign the reception signals 9 (their dimensionality-reduced data representations 109) into different distinguishable clusters 721-723.

Then, preferably, a third sub-step is performed in which each of the clusters 721-723 is assigned to one of the LOS, NLOS, and multipath signal types based on a statistic property of the reception signals 9 of the respective cluster and/or a statistical property of a position that is determined according to the steps described for step S40 using exclusively reception signals 9 of the respective cluster 721-723.

By performing the unsupervised training step comprising the first sub-step of unsupervised training the dimensionality reduction engine 71 and the second and third sub-steps of unsupervised training the clustering engine 72, the trained classifying unit 7 comprising the trained dimensionality reduction engine 71 and the trained clustering engine 72 is obtained.

After that, the localization system 1 of the second exemplary embodiment can enter a runtime phase and operate in the same manner as the localization system 1 of the first exemplary embodiment.

Although the present invention has been described in accordance with preferred exemplary embodiments, it is obvious for the person skilled in the art that modifications are possible in all embodiments.

The second exemplary embodiment described a k-means mathematical model for the clustering engine 72. However, the clustering engine could also be a Gaussian mixture model as described in literature [2], and the second sub-step may be modified accordingly to train the Gaussian mixture model.

The first exemplary embodiment uses a pre-trained signal classifier unit 7, and the second exemplary embodiment starts out with an untrained signal classifier unit 7, performs a data collection phase of automatically collecting training input data, performs a training phase of unsupervised training of the signal classifier unit 7, and then performs a runtime phase in which the trained signal classifier unit 7 is used. However, the data collection phase, the training phase and the runtime phase can also be performed in parallel during live operation. That is, the localization system 1 may be put in use with an untrained or an insufficiently trained signal classifier unit 7, and may initially operate in a less-than-optimum manner when NLOS or multipath signal propagation pathways occur. However, the data representations 109 of the reception signals 9 that are collected in the runtime phase and that are used for determining the position of the object 2 in the runtime phase can also, in parallel, be used to perform unsupervised training, or to perform further unsupervised training, of the signal classifier unit 7. That is, advantageously, the localization system 1 that uses the trainable/trained signal classifier unit 7 may be a self-learning system that can be put in use in a specific premise 3 untrained, and can then over time automatically adapt to the conditions in the premise 3 without requiring any manual human-based labelling of training data or any other kind of human intervention, and can also automatically adapt to changing conditions in the premise 3 without requiring human intervention.

The specific structures described for the encoding engine and decoding engine neural networks 71, 73 are exemplary, and other numbers of neurons, other numbers of layers, and other types of layers may be used as required.

Mathematical models have been described as examples for the clustering engine 72, However, the clustering engine 72 may also be a neural network.

A single computing device 6 has been described that comprises (not explicitly named) units for executing the steps S1-S4 of the localization method and also comprising the trainable and/or trained signal classifier unit 7. However, the trained signal classifier unit 7 may also be provided as a separate device that is in communication with the computing device 6. Likewise, also the database unit 62 may be provided as a separate computing device that is in communication with the computing device 6. The database unit 62 is optional and data representations 109 of reception signals 9 may also always be processed (for training and/or position determinations) on the fly (may only be stored for a short time in transient memory/RAM).

The computing device 6 may perform the steps S1-S4 continuously in a loop whenever a set of data representations 109 of reception signals 9 from different anchor devices 5 for a same signal burst transmitted by the tag 4 is received, and may maintain the most recent determined positions for each tag 4 (of each object 2) in RAM or in the database 2 for retrieval by a requesting device that requests the position of the respective object 2 from the computing device 6.

Alternatively, the computing device 6 may maintain, for each tag 4, the most recent set of data representations 109 of reception signals 9 from different anchor device 6 for a same signal burst transmitted by the tag 4, in RAM or in the database unit 62. The computing device 6 may then perform steps S1-S4 only when the requesting device requests the position of the object 2 based on the stored signal data representations 109.

These examples of when the computing device 6 performs which steps are non-limiting and other operational combinations can be used as required, as long as at least steps S1 to S4 are performed so as to determine a position of the object 2.

### Bibliography

[1] MacQueen, James et al. Some methods for classification and analysis of multivariate observations. In Proceedings of the fifth Berkeley symposium on mathematical statistics and probability, pp. 281-297, 1967.
[2] Bishop, Christopher M. Pattern recognition and machine learning. springer New York, 2006.
[3] Kram, Sebastian, et al. "UWB channel impulse responses for positioning in complex environments: A detailed feature analysis." Sensors 19.24 (2019): 5547.

## Claims

1. A method of localizing an object (2) using an ultrawide-band radio-based positioning technique, the method comprising:
a) transmitting (S1), by a tag (4) attached to the object (2), an ultrawide-band radio signal;
b) receiving (S2), by each of a plurality of anchor devices (5) arranged in an environment (3) in which the object (2) is located, the ultrawide-band radio signal as a respective reception signal (9); and
d) using (S4) the ultrawide-band radio-based positioning technique to determine a position of the object (2) in the environment (3) based on the plurality of reception signals (9) of the plurality of anchor devices (5),
wherein the method further comprises:
c) using (S3) a trained signal classifier unit (7) that comprises a trained dimensionality reduction engine (71) and a trained clustering engine (72) to determine whether the respective reception signal (9) is a line-of-sight signal (91); and
step d) is performed dependent on a result of the determination made in step c).

2. The method of claim 1, wherein the ultrawide-band radio-based positioning technique is one of Time Difference of Arrival, TDoA, and Two-Way Ranging, TWR.

3. The method of claim 1 or 2, wherein step c) comprises determining whether the respective reception signal (9) is a line-of-sight signal (91), a non-line-of-sight signal (92) or a multipath signal (93).

4. The method of one of claims 1 to 3, wherein
step c) comprises a hard determination that assigns the reception signal (9) to exactly one signal type (91-93), and
step d) comprises discarding the reception signal (9) if it is not a line-of-sight signal (91).

5. The method of one of claims 1 to 3, wherein
step c) comprises a soft determination that determines, for each reception signal (9), respective probabilities of the reception signal (9) being a respective one of a plurality of signal types (91-93), and
step d) comprises determining the position of the object (2) based on the plurality of reception signals (9) weighted according to their respective probability of being a line-of-sight signal (91).

6. The method of any one of the preceding claims, wherein the reception signal (9) is a time-dependent channel impulse response, CIR, of a wireless channel to receipt of the ultra-wide band radio signal at the respective anchor device (5).

7. The method of any one of claims 1 to 6, wherein step d) comprises inputting a data representation (109) of the reception signal (9) into the trained dimensionality reduction engine (71), inputting an output of the trained dimensionality reduction engine (71) into the trained clustering engine (72) and determining whether the reception signal (9) is a line-of-sight signal (91) based on an output of the trained clustering engine (72).

8. The method of any one of claims 1 to 7, further comprising:
e) unsupervised training of the signal classifier unit (7) using unlabeled data representations (109) of a plurality of the reception signals (9) as training input data.

9. The method of claim 8, wherein step e) comprises a first sub-step of unsupervised training the dimensionality reduction engine (71) by:
- forming an autoencoder (703) comprising the dimensionality reduction engine (71) as an encoding engine and a decoding engine (73); and
- unsupervised training of the autoencoder (703) so as to minimize its reconstruction error.

10. The method of claim 9, wherein step e) comprises a second sub-step of unsupervised training the clustering engine (72) by:
- inputting the data representations (109) of the reception signals (9) to the input layer of the dimensional reduction engine (71) trained in the first sub-step and
- unsupervised training of the clustering engine (72) using data representations output at an output layer (71n) of the dimensionality reduction engine (71) as training input data for the unsupervised training of the clustering engine (72).

11. The method of any one of claims 1 to 10, wherein the clustering engine (72) comprises one of a k-means model and a Gaussian mixture model.

12. The method of any one of claims 1 to 11, wherein step e) comprises a third sub-step of assigning each cluster (721-723) identified by the clustering engine (72) trained in the second sub-step to one of the signal types (91-93) based on:
- a statistical property of the reception signals (9) of the respective cluster (721-723) and/or
- a statistical property of the position determined in step d) using exclusively reception signals (9) of the respective cluster (721-723).

13. A computer program product comprising instructions which, when the program is executed by one or more computing devices (6, 5), cause the one or more computing devices (6, 5) to carry out the method of one of claims 1-12.

14. A system (1) for localizing an object (2) using an ultrawide-band radio-based positioning technique, the system (1) comprising:
b) a plurality of anchor devices (5) arranged in an environment (3) in which the object (2) is located and configured to receive an ultrawide-band radio signal that is transmitted by a tag (4) attached to the object (2) as a respective reception signal (9);
c) a computing device (6) configured to use the ultrawide-band radio-based positioning technique to determine a position of the object (2) in the environment (3) based on the plurality of reception signals (9) of the plurality of anchor devices (5);
d) a trained signal classifier unit (7) that comprises a trained dimensionality reduction engine (71) and a trained clustering engine (72) and is configured to determine whether the respective reception signal (9) is a line-of-sight signal (91);
wherein
the computing device (6) is configured to determine the position of the object (2) dependent on a result of the determination made by the trained signal classifier unit (7).

15. The system of claim 14, further comprising a) the tag (4) attached to the object (2) and configured to transmit the ultrawide-band radio signal.
